Europäisches Patentamt

European Patent Office

Office européen des brevets

(11) Veröffentlichungsnummer: **0 336 375 B1**

(12) **EUROPÄISCHE PATENTSCHRIFT**

(45) Veröffentlichungstag der Patentschrift: **07.07.93**

(21) Anmeldenummer: **89105902.4**

(22) Anmeldetag: **04.04.89**

(51) Int. Cl.⁵: $H01Q\ 1/24$, $H04B\ 1/034$

(54) **Funkgerät.**

(30) Priorität: **08.04.88 DE 3811800**

(43) Veröffentlichungstag der Anmeldung:
**11.10.89 Patentblatt 89/41**

(45) Bekanntmachung des Hinweises auf die
Patenterteilung:
**07.07.93 Patentblatt 93/27**

(84) Benannte Vertragsstaaten:
**AT BE CH DE FR GB IT LI LU NL SE**

(56) Entgegenhaltungen:
**EP-A- 0 159 670**
**WO-A-85/00480**
**DE-A- 2 044 156**
**DE-A- 2 652 514**

**PHILIPS TELECOMMUNICATION REVIEW,
Band 41, Nr. 3, September 1983, Seiten
250-256, Hilversum, NL; J. McLEAN: "A new
family of FM portables"**

**FUNKSCHAU, Band 42, Nr. 10, Mai 1970, Seiten 317-320; E. KOCH: "Ein Funksprechgerät
für das 70-cm-Band"**

**PATENT ABSTRACTS OF JAPAN, Band 7, Nr.
103 (E-173)[1248], 6. Mai 1983;& JP-A-58 25**

731

(73) Patentinhaber: **SIEMENS AKTIENGESELL-
SCHAFT
Wittelsbacherplatz 2
W-8000 München 2(DE)**

(72) Erfinder: **Moliere, Thomas, Dipl.-Ing.
Johann-Fichte-Strasse 11
W-8000 München 40(DE)**

# Beschreibung

Die Erfindung bezieht sich auf ein Funkgerät mit einem Sendeempfänger, einer zugehörigen Geräteantenne sowie Schalteinrichtungen zum wahlweisen Anschalten einer externen Antenne.

Tragbare Funkgeräte, z. B. Hand- Funktelefone besitzen im allgemeinen eine zugeordnete Antenne. Zur Reichweitenvergrößerung ist es sinnvoll, den Anschluß einer Außenantenne vorzusehen. Beim Anschluß der Außenantenne muß die Geräteantenne abgekoppelt werden, damit die Sendeenergie voll der Außenantenne zu gute kommt und der Empfänger ungestört allein das auf die Außenantenne einfallende Signal erhält. Die Antennenumschaltung kann dabei problematisch werden hinsichtlich des Aufwandes und der Zuverlässigkeit und zur Unterbrechung einer eventuellen gerade bestehenden Funkverbindung führen. Dies gilt insbesondere für mechanische Schalter, die zudem einem Verschleiß unterworfen sind und einen reflexionsfreien Einsatz in 50-Ohm-Kabelwegen erfordern. Bei Verwendung von Steckverbindern zum Anschließen der Antennen ist das Umstecken umständlich und zeitraubend und bedeutet Unterbrechung einer gerade bestehenden Funkverbindung. Ein Funkgerät nach dem Stand der Technik ist in WO-A-8 500 480 beschrieben.

Der Erfindung liegt die Aufgabe zugrunde, eine einfache und funktechnisch sichere Lösung für eine Antennenumschaltung bei einem Funkgerät anzugeben.

Diese Aufgabe wird gemäß der Erfindung in der Weise gelöst, daß die Geräteantenne über einen Halbleiterschalter und der Antennenanschluß (Antennenbuchse) für die externe Antenne über eine Hochfrequenzleitung an den Sendeempfänger angeschlossen sind und daß beim Einstecken der externen Antenne in die Antennenbuchse der Halbleiterschalter in den Sperrzustand gelangt und der Sendeempfänger zu der einen niedrigen Gleichstromwiderstand aufweisenden externen Antenne durchgeschaltet ist.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

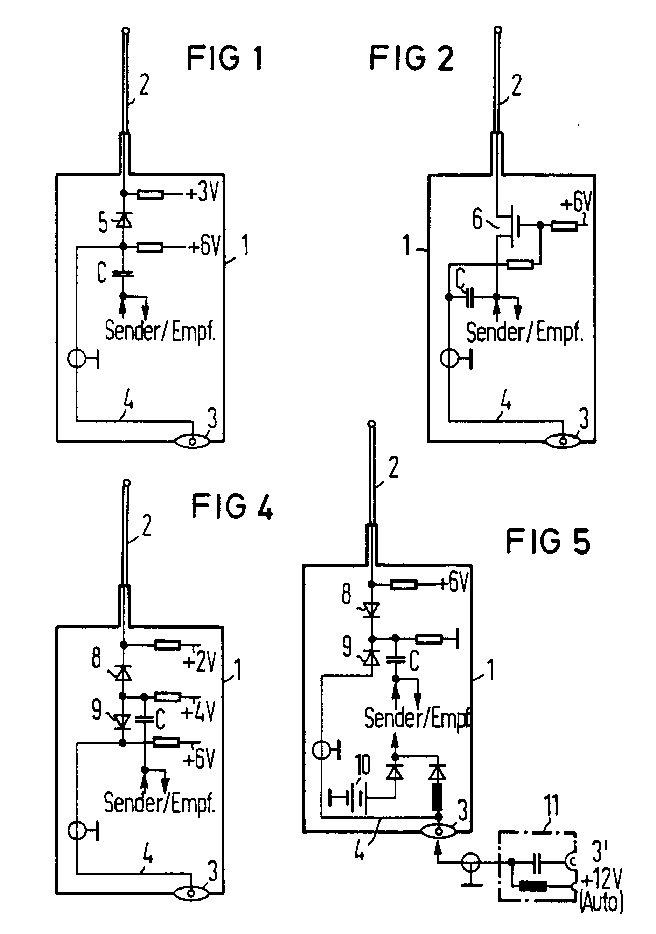

Bei den in den Figuren 1 bis 5 dargestellten Ausführungsbeispielen mit den erfindungsgemäßen elektronischen Schaltern erfolgt eine automatische Abtrennung der Geräteantenne vom Funkgerät, wenn die externe Antenne eingesteckt wird. Das Prinzip der automatischen Antennenumschaltung im Funkgerät wird zunächst anhand des in Fig. 1 dargestellten Funkgerätes erläutert. Das mit 1 bezeichnete Funkgerät enthält Sende- und Empfangseinrichtungen, die in der Figur mit Sender/Empfänger und zugehörigen Pfeilen wiedergegeben sind, sowie eine Geräteantenne 2 und eine Anschlußbuchse 3 für eine externe Antenne. Im Verbindungsweg von der Geräteantenne 2 zum Sendeempfänger ist eine Schaltdiode 5 eingefügt, an deren beiden Anschlüsse über jeweils einen ohmschen Widerstand eine Gleichspannung von +3V bzw. +6V anliegt. Die Anschlußbuchse 3 für die externe Antenne ist über eine auf Halbwellenresonanz abgestimmte Hochfrequenzleitung 4 (I = n /2) mit dem Sendeempfänger verbunden. Diesem wird das jeweilige Antennensignal über einen Kondensator C zugeführt.

Im Betrieb ohne externe Antenne ist der Sendeempfänger über die Schaltdiode 5 mit der Geräteantenne 2 verbunden. Infolge der über die Vorwiderstände angeschlossenen beiden Gleichspannungsquellen (+3V, +6V) wird die Schaltdiode 5 von einem Gleichstrom durchflossen und damit für die Hochfrequenz leitend gemacht. Da die zur Antennenbuchse 3 führende Hochfrequenzleitung 4 auf Halbwellenresonanz abgestimmt ist, belastet sie den Sendeempfänger nicht.

Wird nun eine externe Antenne in die Antennenbuchse 3 eingesteckt, die für Gleichströme einen Kurzschluß darstellt, so sperrt die Schaltdiode 5 - sie ist dann mit 3V vorgespannt - und der Sendeempfänger ist zur externen Antenne durchgeschaltet. So wird eine kontaktlose und verzögerungsfreie Umschaltung gewährleistet. Voraussetzung hierfür ist der niedrige Gleichstromwiderstand der externen Antenne, was bei den meisten Antennen mit Fußpunktanpassung gegeben ist. Andere Antennen können mit einer Paralleldrossel ausgestattet werden.

Als Schaltdiode wird zweckmäßigerweise eine PIN-Diode verwendet, deren Durchlaßwiderstand vom Diodengleichstrom gesteuert werden kann. Es kann aber ebenso als elektronischer Schalter ein FET-Schalter verwendet werden, der leistungslos gesteuert werden kann. Das Schaltungsprinzip hierfür zeigt das Ausführungbeispiel nach Fig. 2. Diese Schaltung entspricht im wesentlichen der nach Fig. 1. Unterschiedlich ist, daß anstelle der Schaltdiode 5 im Verbindungsweg von der Geräteantenne 2 zum Sendeempfänger ein FET-Schalter 6 eingefügt ist.

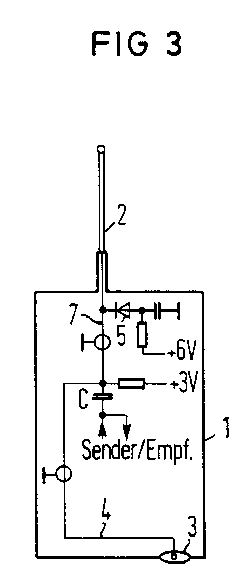

Statt in den Längsweg zur Antenne kann der elektronische Schalter auch in den Querweg nach Masse gelegt werden. Das Ausführungsbeispiel zeigt Fig. 3. Dann ist eine zusätzliche, auf Viertelwellenresonanz abgestimmte Hochfrequenzleitung 7 (I = n·$\frac{\lambda}{4}$) erforderlich. Die Schaltdiode 5 wird beim Anstecken der Außenantenne von einem Gleichstrom durchflossen, also für Hochfrequenz leitend gemacht. Infolge der Transformationswirkung der Viertelwellenleitung 7 wird dann deren an der Sendeempfänger-Seite liegendes Ende hochohmig, belastet den Sendeempfänger also nicht. Die Schaltung hat den Vorteil, daß die Schaltdiode 5 im Handfunkbetrieb stromlos ist, die Funkbatterie also nicht belastet wird. Der beim Anstecken der Außenantenne an die Anschlußbuchse 3 fließende Gleichstrom kann einer externen Stromquelle, z. B. einer Fahrzeugbatterie, entnommen werden.

Statt mit einer abgestimmten Halbwellenleitung kann die automatische Antennenumschaltung auch über Leitungen beliebiger Länge durchgeführt werden. In diesem Fall sind, wie das Ausführungsbeispiel nach Fig. 4 zeigt, zwei Schaltelemente erforderlich. Das eine Schaltelement (Schaltdiode 8) ist im Verbindungsweg zwischen der Geräteantenne 2 und dem Sendeempfänger eingeschaltet, das zweite Schaltelement (Schaltdiode 9) liegt zwischen der Hochfrequenzleitung 4 und dem Sendeempfänger. Der Sendeempfänger ist dabei an den Verbindungspunkt beider Schaltdioden 8,9 angeschlossen, die über Vorwiderstände an Gleichspannungsquellen (+2V, +4V, +6V) angeschlossen sind.

Die über den Gleichstrom-Kurzschluß der externen Antenne zustandekommende automatische Umschaltung kann auch noch andere Funktionen des Funkgerätes mit umschalten, z. B. den Anschluß einer externen Stromversorgung. Statt eines Gleichstrom-Kurzschlusses kann auch eine mit der externen Antenne angelegte Gleichspannung die automatische Umschaltung bewirken. Das ist dann sinnvoll, wenn in dem Weg zur externen Antenne sowieso ein Zwischenadapter, z. B. eine Autohalterung, eingefügt ist und wenn diese Gleichspannung auch als Stromversorgung für das Funkgerät benutzt wird. Ein solches Ausführungsbeispiel mit automatischer Umschaltung der Antennen und der Stromversorgung des Funkgerätes ist in Fig. 5 dargestellt. Die Batterie des Funkgerätes ist hierbei mit 10 bezeichnet, der Zwischenadapter mit 11 und die an ihm vorgesehene Antennenbuchse für eine externe Antenne mit 3'. Als Stromversorgung wird hier die 12V-Spannung der Autobatterie verwendet.

## Patentansprüche

1. Funkgerät (1) mit einem Sendeempfänger, einer zugehörigen Geräteantenne (2) sowie Schalteinrichtungen zum wahlweisen Anschalten einer externen Antenne, bei dem die Geräteantenne (2) über einen Halbleiterschalter (5, 6 oder 8) und der Antennenanschluß (Antennenbuchse) (3) für die externe Antenne über eine erste abgestimmte Hochfrequenzleitung (4) an den Sendeempfänger angeschlossen sind, **dadurch gekennzeichnet,** daß durch das Einstecken der externen Antenne, die einen niedrigen Gleichstromwiderstand aufweist, der Halbleiterschalter (5, 6 oder 8) in den Sperrzustand gebracht wird und daß dadurch der Sendeempfänger zu der externen Antenne durchgeschaltet wird.

2. Funkgerät (1) nach Anspruch 1, **dadurch gekennzeichnet,** daß der Halbleiterschalter eine PIN-Diode (5) ist, deren Durchlaßwiderstand vom Diodenstrom steuerbar ist.

3. Funkgerät (1) nach Anspruch 1, **dadurch gekennzeichnet,** daß der Halbleiterschalter ein FET-Schalter (6) ist.

4. Funkgerät (1) nach einem der Ansprüche 1 bis 3, **dadurch gekennzeichnet,** daß in Zusammenhang mit dem Halbleiterschalter eine zweite auf Viertel- oder Halbwellenresonanz abgestimmte Hochfrequenzleitung (7) verwendet wird.

5. Funkgerät (1) nach Anspruch 1, **gekennzeichnet durch** eine erste Hochfrequenzleitung (4) beliebiger Länge zwischen Antennenbuchse (3) und Sendeempfänger und einen zusätzlichen Halbleiterschalter (9) im Verbindungsweg von der ersten Hochfrequenzleitung (4) zum Sendeempfänger.

6. Funkgerät (1) nach Anspruch 5, **dadurch gekennzeichnet,** daß die Umschaltung von der Geräteantenne (2) auf die externe Antenne durch eine mit der externen Antenne angelegte Gleichspannung erfolgt.

7. Funkgerät (1) nach Anspruch 6, **dadurch gekennzeichnet,** daß im Verbindungsweg des Funkgerätes zur externen Antenne ein Zwischenadapter (11) eingefügt ist.

## Claims

1. Radio set (1) having a transceiver, an associated set antenna (2) and switching devices for the selective connection of an external antenna, in which the set antenna (2) is connected via a semiconductor switch (5, 6 or 8) and the antenna connection (antenna socket) (3) for the external antenna is connected via a first tuned radio-frequency line (4) to the transceiver, characterised in that the semiconductor switch (5, 6 or 8) is switched off by inserting the external antenna, which has a low DC resistance, and in that, in consequence, the transceiver is switched through to the external antenna.

2. Radio set (1) according to Claim 1, characterised in that the semiconductor switch is a PIN diode (5) whose forward resistance can be controlled by the diode current.

3. Radio set (1) according to Claim 1, characterised in that the semiconductor switch is an FET switch (6).

4. Radio set (1) according to one of Claims 1 to 3, characterised in that a second radio-frequency line (7), which is tuned for quarter-wave or half-wave resonance is used in conjunction with the semiconductor switch.

5. Radio set (1) according to Claim 1, characterised by a first radio-frequency line (4) of any desired length between the antenna socket (3) and the transceiver and an additional semiconductor switch (9) in the connection path from the first radio-frequency line (4) to the transceiver.

6. Radio set (1) according to Claim 5, characterised in that the changeover from the set antenna (2) to the external antenna takes place by means of a DC voltage which is applied to the external antenna.

7. Radio set (1) according to Claim 6, characterised in that an intermediate adapter (11) is inserted in the connection path of the radio set to the external antenna.

**Revendications**

1. Appareil radio-électrique (1) ayant un émetteur-récepteur, une antenne (2) associée ainsi que des dispositifs de commutation pour le branchement, au choix, d'une antenne externe, dans lequel l'antenne associée (2) est reliée à l'émetteur-récepteur par un commutateur à semiconducteurs (5,6 ou 8), et la borne d'antenne (3) (douille d'antenne) pour l'antenne externe, est reliée à l'émetteur-récepteur par une première ligne à haute fréquence (4) accordée, caractérisé en ce que, l'enfichage de l'antenne externe, qui présente une faible résistance ohmique, provoque le blocage du commutateur à semiconducteurs (5,6 ou 8), et en ce que, par ce moyen, l'émetteur-récepteur est relié à l'antenne externe.

2. Appareil radio-électrique (1) selon la revendication 1,
caractérisé en ce que le commutateur à semiconducteurs est une diode PIN (5) dont la résistance directe est susceptible d'être commandée par le courant de diode.

3. Appareil radio-électrique (1) selon la revendication 1,
caractérisé en ce que le commutateur à semiconducteurs est un commutateur FET (6).

4. Appareil radio-électrique (1) selon l'une des revendications 1 à 3,
caractérisé en ce que, en rapport avec le commutateur à semiconducteurs, une deuxième ligne à haute fréquence (7), qui est adaptée à la résonance quart d'onde ou à la résonance demi-onde, est utilisée.

5. Appareil radio-électrique (1) selon la revendication 1, caractérisé par une première ligne à haute fréquence (4) de longueur quelconque entre la douille de l'antenne (3) et l'émetteur-récepteur et par un commutateur à semiconducteurs (9) supplémentaire situé dans la voie de liaison menant de la première ligne à haute fréquence (4) à l'émetteur-récepteur.

6. Appareil radio-électrique (1) selon la revendication 5,
caractérisé en ce que la commutation de l'antenne associée (2) à l'antenne extérieure s'effectue à l'aide d'une tension continue appliquée à l'aide de l'antenne externe.

7. Appareil radio-électrique (1) selon la revendication 6,
caractérisé en ce que, dans la voie de liaison menant de l'appareil radio-électrique à l'antenne externe, est inséré un adaptateur intermédiaire (11).

FIG 1

FIG 2

FIG 4

FIG 5

Sender/Empf.

+3V

+6V

+6V

+2V

+4V

+6V

+6V

+6V

+12V
(Auto)

Sender/Empf.

Sender/Empf.

Sender/Empf.

# FIG 3